# EUROPÄISCHE PATENTSCHRIFT

(11) **EP 1 236 660 B1**
(45) Veröffentlichungstag und Bekanntmachung des Hinweises auf die Patenterteilung: **25.05.2005**
(21) Anmeldenummer: 02004630.6
(22) Anmeldetag: 28.02.2002
(51) Int. Cl.: B65G 15/60, B65G 39/02, B65G 47/52

(54) **Vorrichtung zum Ein- und/oder Ausschleusen von Fördergut**
Device to charge and/or discharge conveyed goods
Dispositif pour le chargement et/ou l'evacuation d'articles transportés

(30) Priorität: 03.03.2001 DE 20103758 U
(43) Veröffentlichungstag der Anmeldung: 04.09.2002
(73) Patentinhaber: TRANSNORM SYSTEM GmbH, 31177 Harsum (DE)
(72) Erfinder: Warnecke Karl, 31079 Sibbesse (DE)
(74) Vertreter: Siekmann, Gunnar, Dipl.-Phys.

(56) Entgegenhaltungen:
- EP-A- 0 423 415
- DE-U- 20 103 758
- US-A- 5 083 657
- PATENT ABSTRACTS OF JAPAN vol. 014, no. 481 (M-1037), 19. Oktober 1990 (1990-10-19) -& JP 02 193803 A (OKURA YUSOKI CO LTD), 31. Juli 1990 (1990-07-31)

## Beschreibung

Die Erfindung betrifft eine Vorrichtung zum Ein- und/oder Ausschleusen von Fördergut mit den Merkmalen des Oberbegriffs des Patentanspruchs 1.

Eine Vorrichtung der eingangs genannten Art ist aus der US-A-5083657 bekannt. Die Umlenkelemente sind dort mit Bolzen grundsätzlich lösbar befestigt.

Die JP(A) 02193803 offenbart ebenfalls eine Fördervorrichtung, die ein Umlenkelement im spitzwinkligen Endbereich eines Schleusabschnitts aufweist. Dieses ist einseitig lösbar ausgebildet.

Die EP-A-0423415 beschreibt insbesondere die lösbare Anordnung einer Rolle in einer Fördereinrichtung.

Eine weitere Vorrichtung, nämlich ein Bandförderer mit Ein- und Ausschleuseinrichtung ist beispielsweise aus der EP 0 678 464 B1 bekannt. Mit einer solchen Vorrichtung wird Fördergut einer Förderstrecke zugeführt. Ein Endbereich des Bandförderers ist dazu spitzwinkelig ausgeführt, d.h., daß die Abschlußkante zu der Laufrichtung des Bandes vom rechten Winkel abweicht, und beispielsweise zu der Laufrichtung einen Winkel von 45° oder 30° einnimmt, so daß der Bandförderer oder die Vorrichtung zum Zuführen von Fördergut unter einem von 90° abweichenden Winkel an die Hauptförderstrecke angelegt werden kann. Der Teil der Vorrichtung, über den das Fördergut transportiert wird, wird als Schleusabschnitt bezeichnet, und ein zweiter Teil der Vorrichtung, an dem das Endlosband umgelenkt wird, wird als Umlenkabschnitt bezeichnet. In der EP 0 678 464 B1 ist in diesem Umlenkabschnitt neben einer Antriebstrommel eine als Back-up-Rolle bezeichnete Umlenkrolle vorgesehen, die der Führung des Untertrums ohne Gurtspannung derart dient, daß der Gurt die Antriebstrommel um weit mehr als 180° umschlingt und bei Beginn der Drehung der Antriebstrommel eine sehr große Traktion entwickeln kann, ohne daß eine Gurtspannung aufgebracht werden muß, die zu einer unerwünschten Erhöhung der Reibung führen würde.

Der Erfindung liegt die Aufgabe zugrunde, eine Vorrichtung der eingangs genannten Art zu schaffen, die besonders einfach gewartet werden kann.

Die Lösung dieser Aufgabe erfolgt mit einer Vorrichtung mit den Merkmalen des Schutzanspruchs 1. Vorteilhafte Weiterbildungen der Erfindung sind in den Unteransprüchen angegeben.

Erfindungsgemäß ist ein Umlenkelement des spitzwinkeligen Endbereichs des Schleusabschnittes um eine Endbefestigung schwenkbar, und zwar so weit schwenkbar, daß das Endlosband abnehmbar ist. Das Umlenkelement ist dabei derart lösbar befestigt, daß das Endlosband entspannt und sogar abgezogen und dann auch ausgetauscht werden kann. Auf diese Weise wird die Wartung der Vorrichtung und insbesondere der Austausch eines unter Umständen schadhaften Endlosbandes wesentlich erleichtert.

Das Umlenkelement ist um eine Endbefestigung schwenkbar, so daß das Umlenkelement also an einem Ende befestigt ist und dann auf der ganzen Länge einschwenkbar, ist. Das Umlenkelement wird dabei bevorzugt in Richtung des Schleusabschnittes, insbesondere des rechtwinkeligen Endbereichs, geschwenkt, wobei das Umlenkelement dann also an der Seite des spitzwinkeligen Endbereichs schwenkbar befestigt ist, die benachbart zu dem Umlenkabschnitt ist, so daß das Umlenkelement an der dem Umlenkabschnitt gegenüberliegenden Seite des spitzwinkeligen Endbereichs lösbar befestigt ist und dann zu dem Schleusabschnitt hin schwenkbar ist. Auf diese Weise läßt sich das Endlosband besonders einfach lösen. Das Umlenkelement ist dabei bevorzugt so weit einschwenkbar, daß das Endlosband abnehmbar bzw. abschiebbar ist. Bevorzugt sind zwei parallel zueinander angeordnete Umlenkelemente schwenkbar, wobei ein Obertrum um das obere Umlenkelement und ein Untertrum um das untere Umlenkelement geführt ist.

Das Umlenkelement ist im Querschnitt kreisförmig ausgebildet, obwohl auch andere Ausgestaltungen, wie beispielsweise ein achteckförmiger oder sechseckförmiger Querschnitt in machen Fällen günstig sind.

Der Antrieb ist bevorzugt benachbart zu dem rechtwinkeligen Endbereich des Schleusabschnittes angeordnet. Daher sind die Antriebselemente beabstandet von dem Umlenkelement, und dieses kann besonders einfach in der obengenannten Weise schwenkbar ausgebildet sein ohne daß dabei der Antrieb und die Stabilität des Antriebs beeinträchtigt würde. Der Antrieb ist dabei bevorzugt so ausgebildet, daß eine zu einer Antriebstrommel benachbarte Back-up-Rolle in Umfangsrichtung um die Antriebstrommel schwenkbar ausgebildet ist und daß die Back-up-Rolle mit einer bestimmten Kraft zur Erzeugung einer definierten Bandspannung beaufschlagt ist. Dies erfolgt bevorzugt mit Hilfe einer Feder. Alternativ zu einer Feder kann auch eine pneumatisch betriebene Vorrichtung oder eine Vorrichtung zum Einsatz kommen, bei der die Back-up-Rolle mit Hilfe einer Gewichtskraft nach unten und damit gegen das Band zur Erzeugung einer definierten Bandspannung gezogen wird.

Nachfolgend wird die Erfindung anhand eines in der Zeichnung dargestellten bevorzugten Ausführungsbeispiels weiter erläutert.

Im einzelnen zeigen die schematischen Darstellungen in:
- Fig. 1:: eine perspektivische Ansicht einer erfindungsgemäßen Vorrichtung, die als Einschleuser ausgebildet ist;
- Fig. 2:: eine zweite perspektivische Ansicht der Vorrichtung gemäß Fig. 1;
- Fig. 3:: eine Querschnittsansicht der Vorrichtung gemäß Fig. 1;
- Fig. 4:: eine perspektivische Ansicht einer erfindungsgemäßen Vorrichtung, die als
- Fig. 5:: Ausschleuser ausgebildet ist; eine zweite perspektivische Ansicht einer
- Fig. 6:: Vorrichtung gemäß Fig. 4; und eine Querschnittsansicht einer Vorrichtung gemäß Fig. 4.

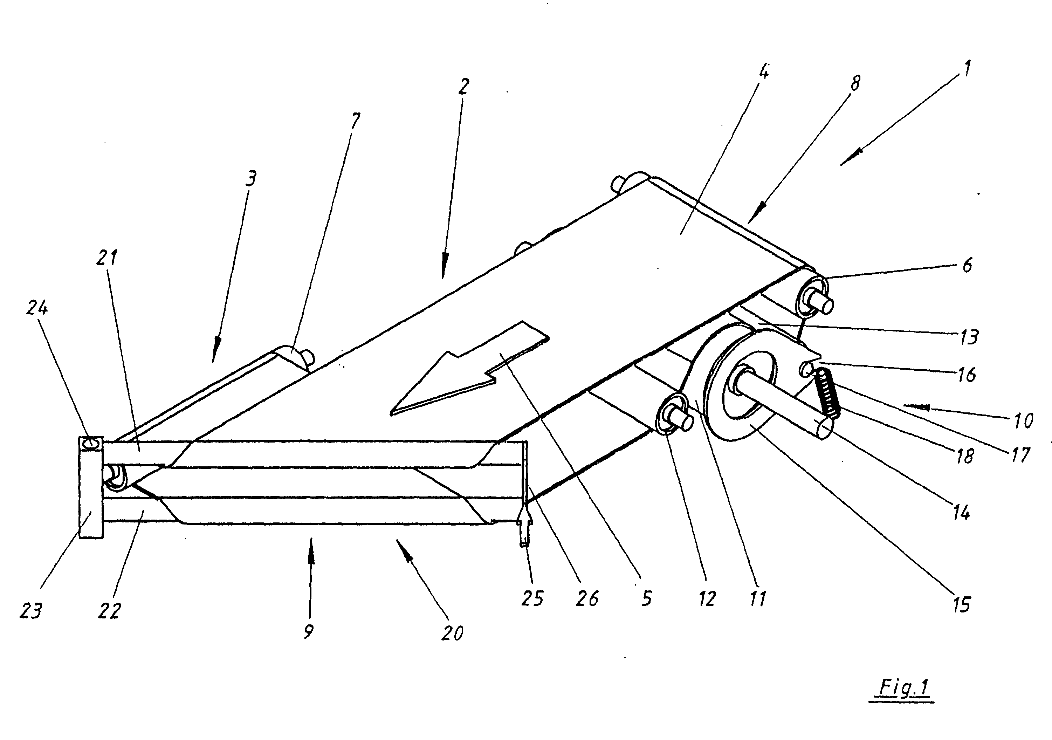

In Fig. 1 ist eine perspektivische Ansicht einer erfindungsgemäßen Vorrichtung 1 dargestellt, die als Einschleuser ausgebildet ist. Die Vorrichtung 1 weist einen Schleusabschnitt 2 und einen Umlenkabschnitt 3 auf, wobei über den Einschleusabschnitt 2 von dessen rechtwinkeligem Endbereich 8 in Richtung des Pfeils 5 zu dem spitzwinkeligen Endbereich 9 Fördergut in eine an dem spitzwinkeligen Endbereich 9 vorbeilaufende Förderstrecke eingeschleust werden kann. Hierzu weist die Vorrichtung 1 ein Endlosband 4 auf, das auf der Oberseite als Obertrum und auf der Unterseite als Untertrum bezeichnet wird. Das Endlosband 4 wird von einem Antrieb 10 angetrieben. Bei der hier dargestellten Ausführungsform als Einschleuser arbeitet der Antrieb 10 "schiebend" oder als schiebender Antrieb, wobei das Endlosband 4 von dem Antrieb über eine Umlenkrolle 6 im rechtwinkeligen Endbereich 8 des Einschleusabschnittes 2 geführt und dann über eine Umlenkeinrichtung 20, die den spitzwinkeligen Endbereich 9 des Einschleusabschnittes 2 bildet, zu einer Umlenkrolle 7 des Umlenkabschnittes 3 geführt ist. Von dieser läuft das Band zurück zu einem unteren Teil der Umlenkeinrichtung 20 und von dort wieder zu dem Antrieb 10.

Der Antrieb 10 wird im wesentlichen von einer Antriebstrommel 11, einer Umlenkrolle 12 und einer Back-up-Rolle 13 gebildet. Die Umlenkrolle 12 und die Back-up-Rolle 13 stellen sicher, daß das Endlosband 4 in einem großen Umschlingungswinkel an der Antriebstrommel 11 anliegt und dadurch eine sehr große Traktion entwickelt werden kann. Die Antriebstrommel 11 ist an der angetriebenen Achse 14 feststehend in der Vorrichtung 1 angeordnet. Ebenso ist die Umlenkrolle 12 feststehend angeordnet. Demgegenüber ist die Back-up-Rolle 13 verschiebbar in Umfangsrichtung zu der Antriebstrommel 11 gelagert und zwar in einer um die Achse 14 der Antriebstrommel 11 drehbar gelagerten Aufhängung 15, die scheibenförmig und mit einer Ausnehmung 16 ausgebildet ist, in die die Achse 17 der Antriebstrommel 11 eingelegt ist. Bei der hier dargestellten schiebenden Ausführungsform ist die Back-up-Rolle 13 zwischen der Antriebstrommel 11 und dem rechtwinkeligen Endabschnitt 8 angeordnet und wird zudem von einer Feder 18 nach unten gezogen, so daß eine bestimmte Spannung auf das Endlosband, das unterhalb der Back-up-Rolle 13 entlangläuft, gegeben wird. Durch die Wahl der Feder 18 mit einer bestimmten Federkraft kann die Spannung des Endlosbandes 4 vorgegeben werden, ohne daß aufwendige Einstellungen und Justierungen durch Fachpersonal nötig wären. Die Feder 18 ist hier als Zugfeder dargestellt.

Alternativ ist diese jedoch so ausgebildet, daß an dem scheibenförmigen Element 15 eine Stange angreift, die von einer Druckfeder beaufschlagt ist, die sich an einen an der Vorrichtung feststehenden Punkt abstützt und dadurch einen Zug auf die Stange ausübt. Die Druckfeder ist also um die Stange gelegt und stützt sich an einem Auge ab, durch welches die Stange hindurchgeführt ist und das an der Vorrichtung feststehend angeordnet ist. Mit dem anderen Ende stützt sich die Druckfeder an einem erweiterten Endbereich der Stange ab, so daß die Druckfeder die Stange insgesamt nach außen drückt und damit im Ergebnis einen Zug auf das Endlosband ausübt.

Die in dem spitzwinkeligen Endbereich 9 des Schleusabschnittes vorgesehene Umlenkeinrichtung 20 weist ein oberes Umlenkelement 21, um das der Obertrum geführt ist, und ein unteres Umlenkelement 22 auf, um das der Untertrum geführt ist. Die Umlenkelemente 21 und 22 sind an einem Halter 23 befestigt, der um eine Schwenkachse 24 schwenkbar ist, so daß die Umlenkelemente 21 und 22 in Richtung des Pfeiles 25 schwenkbar sind. Dazu sind die Umlenkelemente 21 und 22 im rechten Randbereich, insbesondere an dem dort vorgesehenen Rahmen 26, lösbar befestigt.

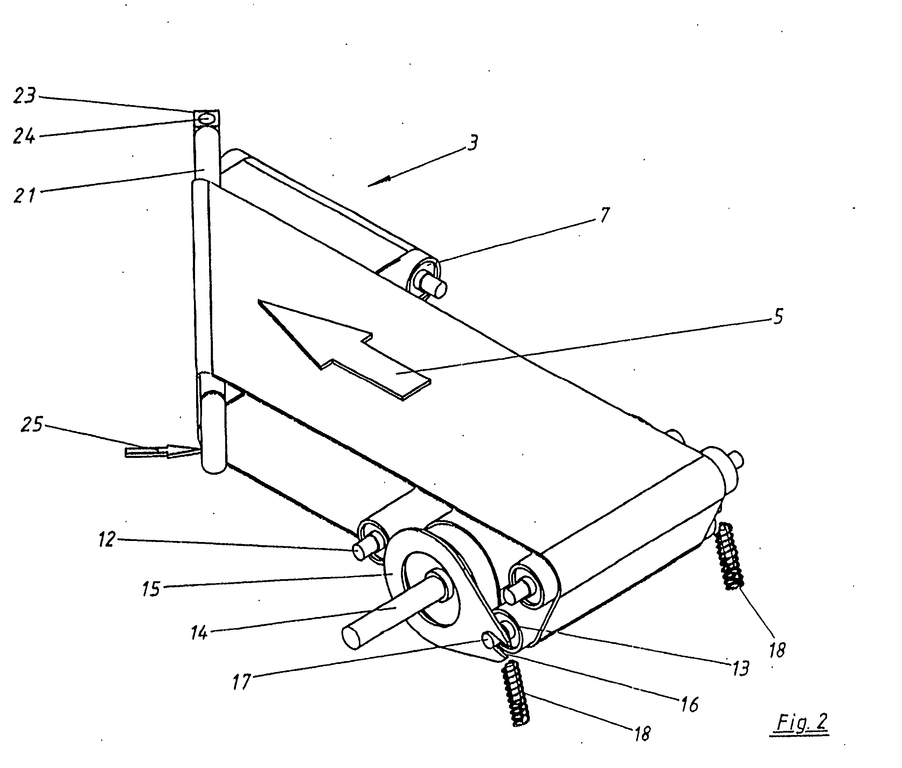

In Fig. 2 ist eine zweite perspektivische Ansicht der Vorrichtung gemäß Fig. 1 dargestellt. In dieser ist die Back-up-Rolle 13 noch deutlicher zu erkennen. Die Back-up-Rolle 13 ist ebenfalls auf einer durchgängigen Achse mit Federn 18 auf beiden Seiten der Achse 17 angeordnet, so daß eine gleichmäßige Zugwirkung gewährleistet ist.

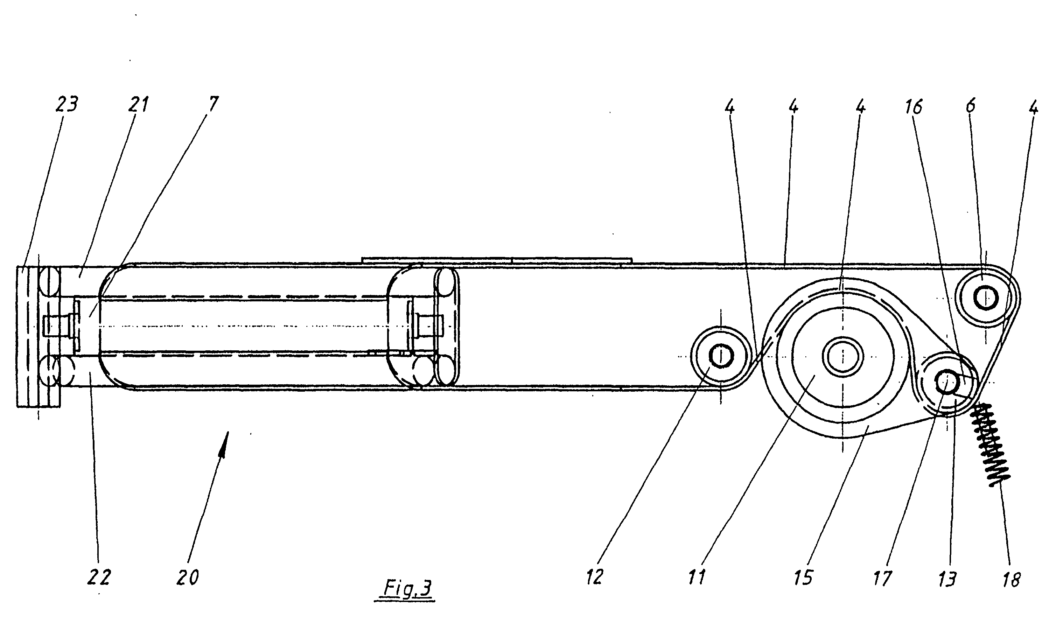

In Fig. 3 ist eine Querschnittsansicht durch die Vorrichtung gemäß der Fig. 1 und 2 dargestellt. Hier ist noch einmal deutlich zu erkennen, daß das Endlosband 4 um die Back-up-Rolle 13, die Antriebstrommel 11 und die Umlenkrolle 12 geführt ist, so daß die Antriebstrommel in einem möglichst großen Bereich des Umfangs umschlungen wird. Im Bereich der Umlenkeinrichtung 20 ist das obere Umlenkelement 21 dargestellt, um das der Obertrum läuft, dann zu der Umlenkrolle 7 des Umlenkabschnittes 3 geführt ist und von dort zurück über das untere Umlenkelement 22 geführt ist und als Untertrum weiterläuft. Die Umlenkelemente 21 und 22 sind an der Halterung 23 angeordnet. Der in Fig. 1 dargestellte vordere Rahmen 26 ist in dieser Querschnittsansicht nicht erkennbar.

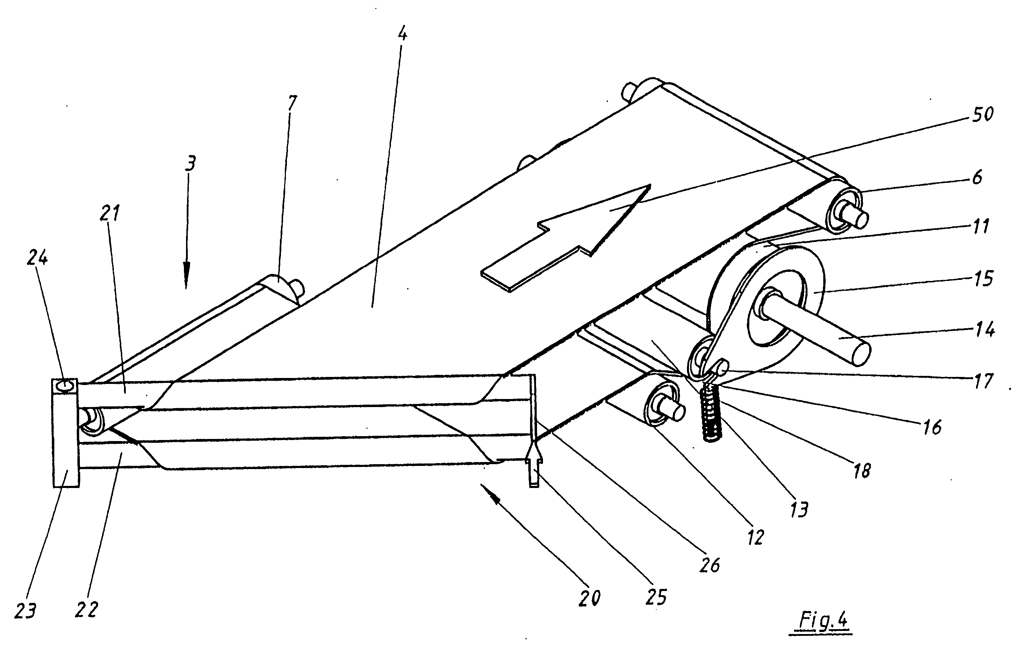

In Fig. 4 ist eine zweite Ausführungsform der erfindungsgemäßen Vorrichtung dargestellt, die als Ausschleuser arbeitet, wie durch den Pfeil 50 dargestellt ist, der anzeigt, daß das Endlosband 4 von dem spitzwinkeligen Endbereich 9 des Schleusabschnittes 2 zu dem rechtwinkeligen Endbereich 8 des Schleusabschnittes 2 läuft. Bei einer solchen Anordnung spricht man von einem ziehenden Antrieb. Der Antrieb 10 ist hier ebenfalls mit einer Umlenkrolle 12, der Antriebstrommel 11 und der Back-up-Rolle 13 ausgebildet, wobei jedoch die Reihenfolge der Anordnung der Rollen gegenüber der schiebenden Ausführungsform der Fig. 1 und 3 anders ist. Die Back-up-Rolle 13 ist hier auf der dem rechtwinkeligen Endbereich 8 des Schleusabschnittes 2 abgewandten Seite der Antriebstrommel 11 angeordnet und liegt daher zwischen der Antriebstrommel 11 und der dieser Antriebstrommel zugeordneten Umlenkrolle 12. Im übrigen sind gleiche Teile mit gleichen Bezugszahlen gekennzeichnet.

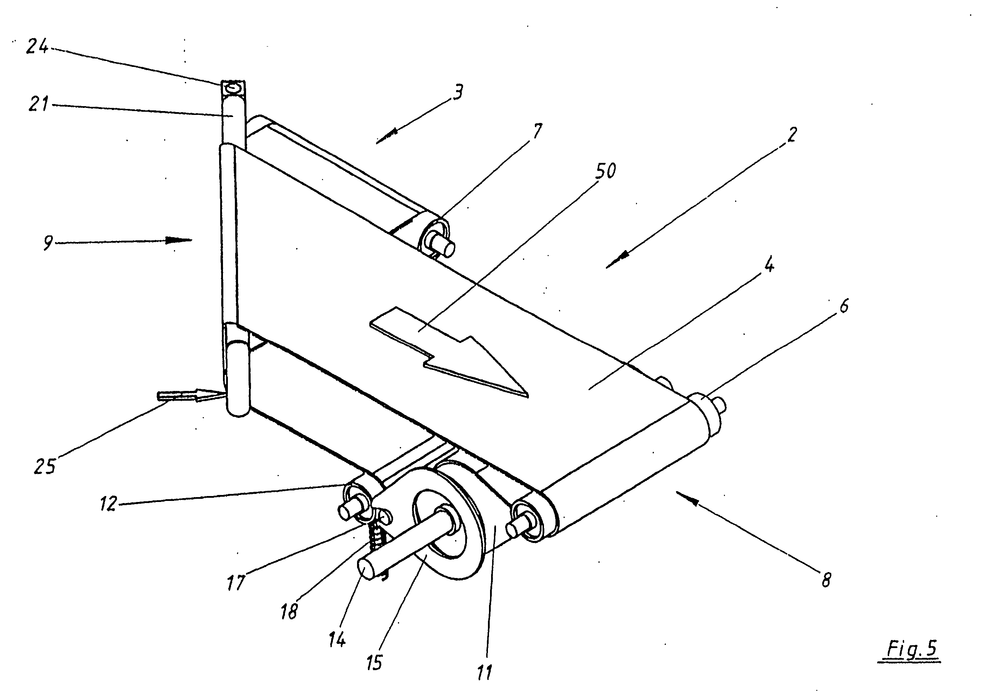

In Fig. 5 ist eine zweite perspektivische Ansicht dargestellt.

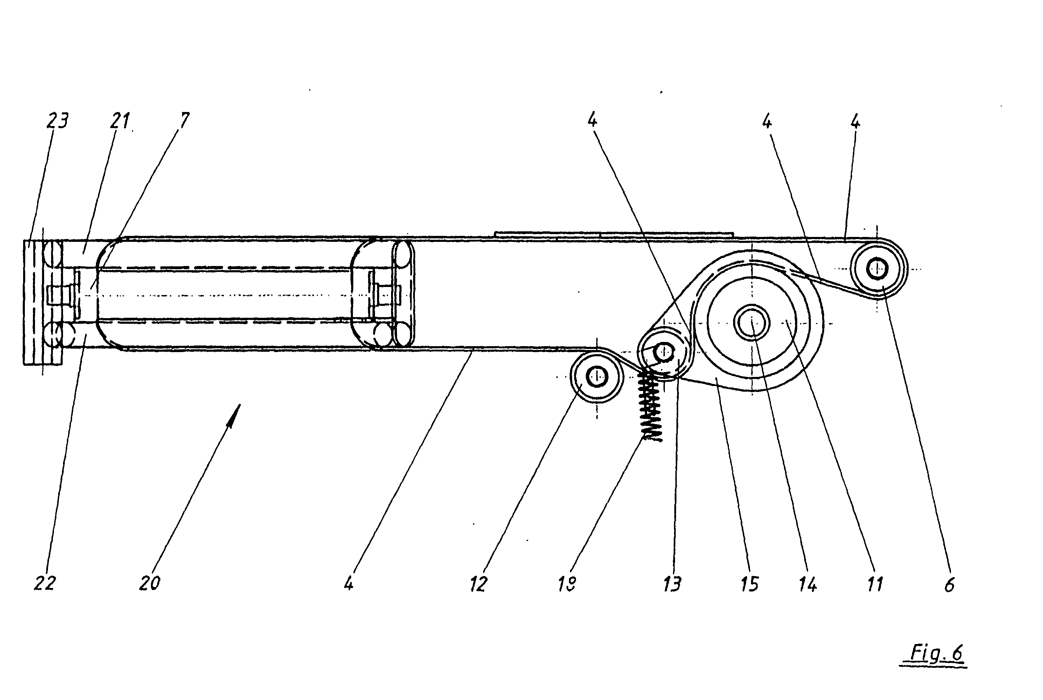

In Fig. 6 ist eine Querschnittsansicht dargestellt. Auch hier sind gleiche Teile mit gleichen Bezugszahlen gekennzeichnet.

## Patentansprüche

1. Vorrichtung zum Ein- und/oder Ausschleusen von Fördergut unter einem Winkel in eine Förderstrecke mit einem Endlosband (4), das um einen Schleusabschnitt (2) und einen Umlenkabschnitt (3) geführt ist, wobei der Schleusabschnitt (2) einen rechtwinkeligen Endbereich (8) und einen spitzwinkeligen Endbereich (9) aufweist, und mit einem Antrieb (10), wobei mindestens ein Umlenkelement (21, 22) des spitzwinkligen Endbereichs (9) des Schleusabschnitts (2) mindestens einseitig lösbar befestigt ist,
**dadurch gekennzeichnet, daß** das Umlenkelement (21, 22) um eine Endbefestigung (23) schwenkbar ist und
daß das Umlenkelement (21, 22) so weit einschwenkbar ist, daß das Endlosband (4) abnehmbar ist.

2. Vorrichtung nach Anspruch 1, **dadurch gekennzeichnet, daß** das Umlenkelement (21, 22) zu dem Schleusabschnitt (2) hinschwenkbar ist.

3. Vorrichtung nach einem der Ansprüche 1 oder 2, **dadurch gekennzeichnet, daß** das Umlenkelement (21, 22) an der Seite des Schleusabschnitts (2) lösbar befestigt ist, die dem Umlenkabschnitt (3) gegenüberliegt.

4. Vorrichtung nach einem der vorhergehenden Ansprüche, **dadurch gekennzeichnet, daß** zwei Umlenkelemente (21, 22) einschwenkbar sind.

5. Vorrichtung nach einem der vorhergehenden Ansprüche, **dadurch gekennzeichnet, daß** das Umlenkelement (21, 22) im Querschnitt kreisförmig ist.

6. Vorrichtung nach einem der vorhergehenden Ansprüche, **dadurch gekennzeichnet, daß** der Antrieb (10) benachbart zu dem rechtwinkeligen Endbereich (8) des Schleusabschnittes (2) angeordnet ist.

7. Vorrichtung nach einem der vorhergehenden Ansprüche, **dadurch gekennzeichnet, daß** der Antrieb (10) eine Antriebstrommel (11) und eine benachbart dazu angeordnete Back-up-Rolle (13) aufweist, die in Umfangsrichtung um die Antriebstrommel (11) schwenkbar angeordnet ist.

8. Vorrichtung nach Anspruch 7, **dadurch gekennzeichnet, daß** die Back-up-Rolle (13) mit einer Feder (18) zur Erzeugung einer definierten Bandspannung beaufschlagt ist.

## Claims

1. A device for placing and/or discharging transported material at an angle in a conveying track with an endless belt (4), which is guided about a sluice section (2) and a guide section (3), whereby the sluice section (2) has a right-angled end region (8) and an acute-angled end region (9), and with a drive (10), whereby at least one guide element (21, 22) of the acute-angled end region (9) of the sluice section (2) is releasably attached at least at one side,
**characterized in that**,
the guide element (21, 22) is pivotable about an end attachment (23) and
that the guide element (21, 22) is pivotable in to such a point that the endless belt (4) is removable.

2. The device according to claim 1, **characterized in that** the guide element (21, 22) can be pivoted back to the sluice section (2).

3. The device according to one of claims 1 or 2,
**characterized in that** the guide element (21, 22) is releasably attached to the side of the sluice section, which lies opposite the guide section (3).

4. The device according to one of the preceding claims, **characterized in that** two guide elements (21, 22) are pivotable in.

5. The device according to one of the preceding claims, **characterized in that** the guide element (21, 22) is circular in cross section.

6. The device according to one of the preceding claims, **characterized in that** the drive (10) is arranged adjacent to the right-angled end region (8) of the sluice section (2).

7. The device according to one of the preceding claims, **characterized in that** the drive (10) has a driving pulley (11) and a back-up pulley (13) arranged adjacent thereto, which is pivotably arranged in the circumferential direction about the drive pulley (11).

8. The device according to claim 7, **characterized in that** the back-up pulley (13) is loaded with a spring (18) for producing a defined band tension.

## Revendications

1. Dispositif pour charger et/ou évacuer suivant un certain angle sur une section de transport ou à partir de celle-ci des articles transportés, comportant une bande sans fin (4) qui passe sur une section formant sas (2) et sur une section de déviation (3), la section formant sas (2) présentant une zone d'extrémité à angle droit (8) et une zone d'extrémité à angle aigu (9), et un entraînement (10), au moins un élément de déviation (21, 22) de la zone d'extrémité à angle aigu (9) de la section formant sas (2) étant fixé de manière amovible au moins sur un côté,
**caractérisé en ce que** l'élément de déviation (21, 22) est apte à pivoter sur une fixation d'extrémité (23) et **en ce que** l'élément de déviation (21, 22) est apte à être rentré suffisamment pour que la bande sans fin (4) puisse être enlevée.

2. Dispositif selon la revendication 1, **caractérisé en ce que** l'élément de déviation (21, 22) est apte à pivoter vers la section formant sas (2).

3. Dispositif selon la revendication 1 ou 2, **caractérisé en ce que** l'élément de déviation (21, 22) est fixé de manière amovible au côté de la section formant sas (2) qui fait face à la section de déviation (3).

4. Dispositif selon l'une des revendications précédentes, **caractérisé en ce que** deux éléments de déviation (21, 22) sont aptes à être rentrés.

5. Dispositif selon l'une des revendications précédentes, **caractérisé en ce que** l'élément de déviation (21, 22) a une section transversale circulaire.

6. Dispositif selon l'une des revendications précédentes, **caractérisé en ce que** l'entraînement (10) est disposé près de la zone d'extrémité à angle droit (8) de la section formant sas (2).

7. Dispositif selon l'une des revendications précédentes, **caractérisé en ce que** l'entraînement (10) comporte un tambour d'entraînement (11) et un cylindre d'appui (13) qui est voisin de celui-ci et qui est disposé de manière à pouvoir pivoter dans le sens circonférentiel sur ledit tambour d'entraînement (11).

8. Dispositif selon la revendication 7, **caractérisé en ce que** le cylindre d'appui (13) est contraint à l'aide d'un ressort (18) pour produire une tension de bande définie.
